# EUROPEAN PATENT APPLICATION

(11) **EP 4 329 128 A1**
(43) Date of publication of application: **28.02.2024**
(21) Application number: 22306244.9
(22) Date of filing: 23.08.2022
(51) Int. Cl.: H02J 3/06, H02J 3/18, H02J 3/36

(54) **HVDC TRANSFORMER CONFIGURATION FOR SPLIT PCCS**

(71) Applicant: General Electric Technology GmbH, 5400 Baden (CH)
(72) Inventor: KUMAR, Amit, Stafford, ST16 1WS (GB); WALMSLEY, Jonathan, Stafford, ST17 4FD (GB); BARKER, Carl, Stafford, ST16 1WS (GB)
(74) Representative: Brevalex

(57) **Abstract**

The invention relates to a HVDC transformer configuration (10, 50) for use in electrical power transmission to at least a 1^{st} AC network and a 2^{nd} AC network, the configuration comprising:
- a 3 single phase HVDC transformer, in which each phase comprises a first winding (2, 12, 22) connected to a HVDC converter (s) and a second winding (4, 14, 24) connected to both said 1^{st} AC network and said 2^{nd} AC network;
- wherein the second winding (4, 14, 24) of each phase is configured as auto-transformer and comprises a tap connection (6, 16, 26), said tap connection being connected to a Phase Shifting Transformer (30) to regulate the power transmission to said 2^{nd} AC network

## Description

### TECHNICAL FIELD AND PRIOR ART

Conventionally, the HVDC transmission systems utilized to supply bulk power from one AC network at sending end to an AC network at a receiving end, and transmission infrastructure at both ends, is planned in advance.

However, this is not fully applicable to offshore wind parks or other renewable energy sources, when power generation is intermittent in nature, because power received at the receiving end varies with time. Hence the AC network at the receiving end should be equipped to accommodate the variation of power received at any time.

The increasing generation of intermittent power adds uncertainty in the interconnected grid and congestion problems; hence there is sometimes the need to distribute this power into more than one AC network at the receiving end AC side of the HVDC.

Furthermore, the generated power may be intended for more than one network, where a control of power distribution into more than one network is needed from the HVDC system, especially in a liberalized market. Normally, different AC networks are interconnected for emergency backup, synchronization and to increase the security of power supply. As such, in interconnected AC transmission systems, there is little influence on power transfer flow into each transmission network, which is based on Krichhoff's law. The interconnected networks may operate at same or different voltage levels.

Normally, FACTS devices and Phase Shifting Transformers (PST) are employed in order to overcome the aforementioned challenges in the AC grid.

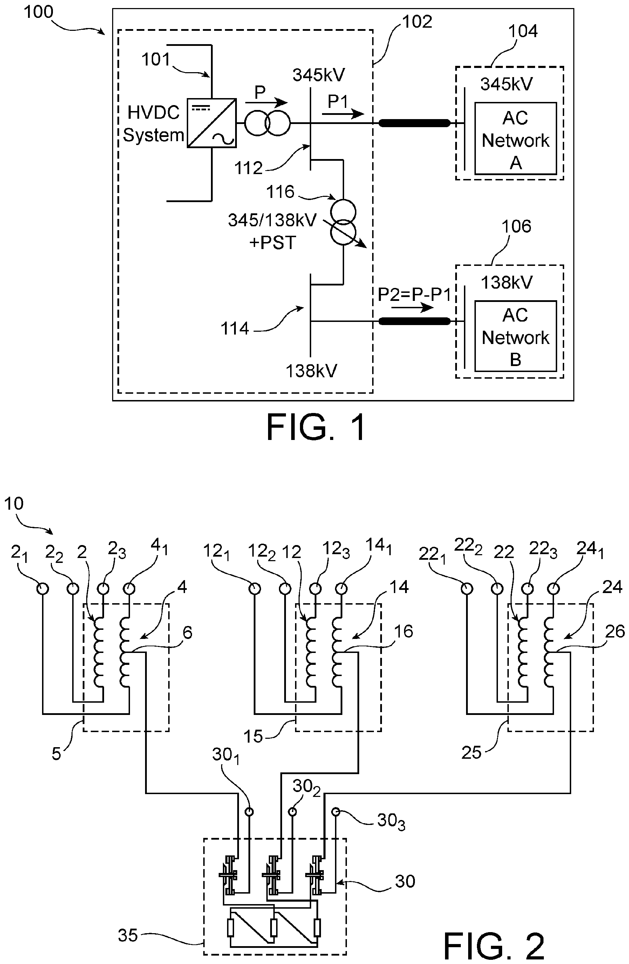

Figure 1 shows the architecture 100 of a known HVDC system 102 connecting to 2 separate networks 104, 106 which operate at different voltages, for example 345 kV and 138 kV, and to which power is delivered with said different voltages.

The system 102 comprises a 345 kV HVDC terminal 112, a 138 kV terminal 114 and a step-down transformer 116 in between. More precisely, the step down transformer 116 is combined with a phase shifting transformer (not shown on this figure). An example of a phase shifting transformer is given in the article of J.Verboomen et al., "Phase Shifting Transformers: Principles and Applications", Conference Paper, December 2005. The system 101 upstream of terminal 112 converts direct current into alternating current.

This known architecture therefore requires the use of 2 sets of transformer, i.e. a HVDC interface transformer (usually 3 single phase HVDC transformers), and a step-down Transformer and PST (usually a 3 phase combined auto transformer and PST transformer).

The known devices are therefore complex and bulky, and require the use of many active parts. There is thus a requirement for simpler systems, implementing less active parts.

Furthermore, a 3 phase combined auto transformer and PST transformer may be a challenge even for a relatively low power (for example 400 MW), in which case 3 single phase combined auto and PST transformer might be necessary, increasing the cost and footprint requirements to install the system, and also making the system, in particular the connections between 3 units, even more complex.

### PRESENTATION OF THE INVENTION

This invention is related to a HVDC transformer, adapted to feed power to two separate networks at different voltages from a single converter.

The present invention first concerns a HVDC transformer, or a HVDC transformer configuration, for use in electrical power transmission to at least a 1^{st} AC network, operating at a 1^{st} voltage (for example at 345 kV), and a 2^{nd} AC network, operating at a 2^{nd} voltage (different from the 1^{st} voltage, for example operating at 138 kV) said configuration comprising:
- a HVDC transformer, in which a first winding is connected, or for connection, to a HVDC converter(s) and a second winding is connected, or for connection, to both said 1^{st} AC network and said 2^{nd} AC network;
- wherein the second winding is configured as auto-transformer and comprises a tap connection, said tap connection being connected to a phase shifting transformer to regulate the power transmission to said 2^{nd} AC network.

In a HVDC transformer configuration according to the invention, each phase of the phase shifting transformer can be in a same tank as one phase of the HVDC transformer.

Alternatively, each phase of the phase shifting transformer can be in a separate tank, for example either in single phase or in three phase arrangements.

Each tank can be filled with oil.

In a particular embodiment, the HVDC transformer can be configured as a 3 single phase transformer.

In another particular embodiment, the second winding of each phase of the HVDC transformer is equipped with a tap changer to regulate the reactive power and/or AC voltage between said HVDC transformer and said AC network(s).

The invention also concerns a network interconnection for supplying power, to 2 or more of a AC network(s), said network interconnection comprising a HVDC Transformer configuration according to the invention.

The invention also concerns a system comprising HVDC transformer according to the invention, connected to an HVDC converter and to at least a 1^{st} AC network, operating at a 1^{st} voltage (for example at 345 kV), and a 2^{nd} AC network, operating at a 2^{nd} voltage (different from the 1^{st} voltage, for example operating at 138 kV).

The invention also concerns a method implementing a HVDC transformer or a system according to the invention for:
- supplying power to different AC networks;
- and/or to transfer power between two networks.

A method for supplying power to at least a 1^{st} AC network and a 2^{nd} AC network(s), through a network interconnection or a system according to the invention, comprises providing power:
- to said 1^{st} AC network;
- and to said 2^{nd} AC network, through said Phase Shifting Transformer.

### BRIEF DESCRIPTION OF THE DRAWINGS

- Figure 1 shows the architecture of a known HVDC system connecting to 2 separate networks;
- Figure 2 is a 1^{st} embodiment of a transformer arrangement according to the invention;
- Figure 3 is a variant of a transformer arrangement according to the invention;
- Figure 4 is a 2^{nd} embodiment of a transformer arrangement according to the invention.

### DETAILED PRESENTATION OF PARTICULAR EMBODIMENTS

The present invention is described in the context of a three-phase network but can be applied as well to another number of phase(s). In particular and unless otherwise indicated the mention of a winding will refer to any phase, the explanation given for one phase applying to the other phases.

Figure 2 shows a 1^{st} embodiment of a HVDC transformer configuration 10 according to the invention. It is intended for connection to a HVDC converter and/or for use in electrical power transmission to at least 2 AC networks or to exchange power between at least 2 networks, for example at least a 1^{st} AC network, operating at a 1^{st} voltage, for example at 345 kV, and at least a 2^{nd} AC network, operating at a 2^{nd} voltage, different from the 1^{st} voltage, for example operating at 138 kV.

Each phase comprises a primary winding 2 (or separate winding), resp. 12, 22 and a secondary winding (or auto-transformer winding) 4, resp. 14, 24; the secondary winding 4, resp. 14, 24 is itself configured as an autotransformer and comprises a tap connection 6, resp. 16, 26 which is connected to a phase of a Phase Shifting Transformer (PST) 30. For each phase, the voltage provided to the PST depends on the position of the tap on the corresponding secondary winding. A 1^{st} network (operating at a 1^{st} voltage, for example at 345 kV, not represented on the figure) is connected to terminals 4₁, 14₁ and 24₁ of each secondary winding, a 2^{nd} network (operating at a 2^{nd} voltage, different from the 1^{st} voltage, for example at 138 kV, not represented on the figure) is connected to terminals 30₁, 30₂ and 30₃ of the PST.

Terminals 2₃, 12₃, 22₃ are for connection, or are connected, to an HVDC converter (not represented on this figure nor on any of the following figures).

Terminal 2₁,12₁, 22₁ can be connected together to form an AC network side star neutral point for earthing. Terminal 22, 12₂, 22₂ can be connected together to form the HVDC converter side star neutral point for high impedance earthing, when star-star transformer connections are used.

Alternatively 22, 12₂, 22₂ along with terminal 2₃, 12₃, 22₃ form delta connections, when star-delta transformer connections are used, to make connection to the HVDC converter.

For each phase, the part (the secondary winding) used as step-down transformer is preferably merged with a phase of the HVDC transformer in a same tank 5 (resp. 15, 25). Each tank can be filled with oil.

The 3 phase PST 30 can be a symmetric type single core phase shifter (but other types are possible). It can be placed in a separate tank 35, in which case the system makes use of only 4 tanks 5, 15, 25, 35, instead of the bulky solution of 6 tanks (one tank for each phase of the HVDC transformer and one tank for each phase of the combined step down and phase shifting transformer).

According to this embodiment, use is made of a HVDC transformer 2-6 (resp. 12-16, 24-26) at a 1^{st} voltage, for example 345 kV, that has an autoconnection to feed the side of the second network, at a 2^{nd} voltage, lower than 1^{st} voltage, for example at 138 kV.

Connections from the single-phase transformers to the phase shifting transformer can comprise a through bus-bar or usual cable connections for ease of fitting and to reduce site footprint.

In this 1^{st} embodiment all the units can be of conventional type, for example the HVDC converter transformer can implement conventional windings 2, 12, 22 and 4, 14, 24 and cores. The phase shifting transformer 30 is a separate stand-alone unit and can be tested completely separately from the converter transformers. According to this 1^{st} embodiment, the step down function is moved from the PST to the HVDC transformer, which optimizes the material and its size.

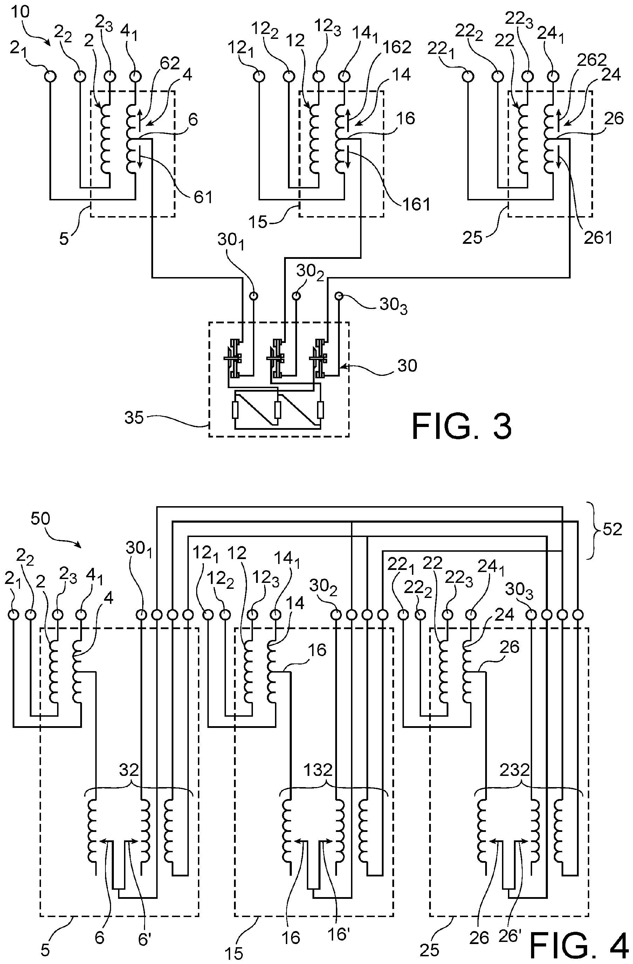

Figure 3 shows a variant of the 1^{st} embodiment, which includes a tap changer to adjust (see the arrows 61, 62, 161, 162, 261, 262) the position of any of the taps, for example to regulate voltage and/or reactive power of one of the AC networks. The same reference numbers as on figure 2 designate same or similar elements and reference is made to the above description.

The other aspects and advantages described above in connection with the 1^{st} embodiment apply to this variant.

Figure 4 shows a 2^{nd} embodiment of a HVDC transformer configuration 50 according to the invention.

In this embodiment, the HVDC transformer active part is the same as already described above and the same reference numbers as on figures 2 and 3 designate same or similar elements.

But each phase of both the step-down transformer and the PST are merged into the HVDC transformer. The connections between the single phase units for PST operation can be implemented through usual bushings and/or plugin type cables bushings.

The difference with respect to the embodiment disclosed in connection with figures 2 and 3 is that the phase shifting transformer 30 of figures 2 and 3 is split on figure 4 into 3 single phase cores 32, resp. 132, 232, each of them being put in a same tank 5, resp.15, 25 as the corresponding single-phase converter transformer.

This embodiment, like the preceding ones, saves costs and space. A number of connections 52 can be required between the different units but this can be done with usual cable connections, for example usual bushings and/or plugin type cables bushings, in particular if these cable connections are relatively low voltage connection.

The invention can be implemented in a method for transmitting electrical power to one, 2 or more AC networks. In a variant, power between two different AC networks can also be transferred through a HVDC transformer according to the invention.

In the prior art, a separate converter transformer is connected to a combined phase shifting/auto transformer.

According to the invention, the auto connection is now moved to the converter transformer. Instead of a single AC line winding in the converter transformer, use is made of an auto connected winding. Figures 2 and 3 show windings 2 and 4 in the converter transformer. Winding 2 can be rated for the full power from the converter. Winding 4 is the auto connected winding: it can be split into 2 sections with a tap off at point 6 for connection to the phase shifting transformer. This takes the step down voltage function out of the phase shifting active part, the converter transformer having 1 input connection from the converter and 2 output terminals: one for connecting to a HV AC network and the other connecting into the separate phase shifting transformer operating to a different AC system voltage. The relevant sections of the auto connected winding can be rated for the power transmission of the associated AC network.

The embodiment of figure 4 accomplishes the same but the active part for the phase shifting function is moved to, or is placed, inside the tank of the converter transformer. In figure 2 there are 4 tanks in total, three single phase converter transformers and a three phase- phase shifting transformer. Figure 4 utilises only 3 tanks. The connections between the three tanks are associated with the phase shifting active part.

Any embodiment of an HVDC transformer according to the invention can be connected to a HVDC converter and to at least a 1^{st} AC network, operating at a 1^{st} voltage (for example at 345 kV), and a 2^{nd} AC network, operating at a 2^{nd} voltage (different from the 1^{st} voltage, for example operating at 138 kV). This the invention also includes the configuration of a HVDC transformer according to the invention connected to a HVDC converter and to at least said 1^{st} AC network, operating at a 1^{st} voltage (for example at 345 kV), and to said 2^{nd} AC network, operating at a 2^{nd} voltage (different from the 1^{st} voltage, for example operating at 138 kV).

The new solution proposed by this invention saves transformers costs (because of the lower number of tanks and material used etc.), allows a smaller footprint to install them and easy connection between the different units.

In terms of process, the invention offers the possibility to split the power flow between different networks as desired.

With an HVDC transformer according to the invention, power can be provided or supplied to said 1^{st} AC network, operating at a 1^{st} voltage (for example at 345 kV), and to said 2^{nd} AC network, operating at a 2^{nd} voltage (different from the 1^{st} voltage, for example operating at 138 kV).

With an HVDC transformer according to the invention:
- power can be provided or supplied to said 1^{st} AC network, operating at a 1^{st} voltage (for example at 345 kV), and to said 2^{nd} AC network, operating at a 2^{nd} voltage (different from the 1^{st} voltage, for example operating at 138 kV);
- alternatively, power can be transferred from one of said 1^{st} AC network and 2^{nd} AC network, to the other network to another network.

The invention can be implemented for example in a network interconnection as disclosed in WO2022/117489.

## Claims

1. A HVDC transformer configuration (10, 50) for use in electrical power transmission to at least a 1^{st} AC network and a 2^{nd} AC network, the configuration comprising:
- a 3 single phase HVDC transformer, in which each phase comprises a first winding (2, 12, 22) connected to a HVDC converter (s) and a second winding (4, 14, 24) connected to both 1^{st} AC network and said 2^{nd} AC network;
- wherein each of said second windings (4, 14, 24) is configured as auto-transformer and comprises a tap connection (6, 16, 26), said tap connection being connected to a Phase Shifting Transformer (30) to regulate the power transmission to said 2^{nd} AC network.

2. - A HVDC transformer configuration as in claim 1, wherein each phase of the phase shifting transformer is within a same tank (5, 15, 25) as one phase of the HVDC transformer.

3. - A HVDC transformer configuration as in claim 1, wherein each phase of the phase shifting transformer is in a separate tank (35), for example either in single phase or in three phase arrangement.

4. - A HVDC Transformer configuration as in any of claims 1 to 3, wherein the second winding (4, 14, 24) of each phase of the HVDC transformer is equipped with a tap changer to regulate the reactive power/AC voltage between said HVDC transformer and said 2^{nd} AC network.

5. A network interconnection for supplying power to at least a 1^{st} AC network and a 2^{nd} AC network(s), comprising a HVDC Transformer configuration as in any of claims 1 to 4

6. A method for supplying power to at least a 1^{st} AC network and a 2^{nd} AC network(s), through a network interconnection according to claim 5, comprising providing power:
- to said 1^{st} AC network;
- and to said 2^{nd} AC network, through said Phase Shifting Transformer (30)
